Europäisches Patentamt

European Patent Office

Office européen des brevets

(11) Veröffentlichungsnummer : **0 097 287**
**B1**

# (12) EUROPÄISCHE PATENTSCHRIFT

(45) Veröffentlichungstag der Patentschrift :
16.04.86

(21) Anmeldenummer : 83105648.6

(22) Anmeldetag : 09.06.83

(51) Int. Cl.⁴ : **F 28 D   1/04,** F 28 D  17/00,
F 28 F 21/00, B 60 H   3/00

(54) Wärmetauscher, insbesondere für Heizungs- und/oder Klimaanlagen, vorzugsweise in Kraftfahrzeugen.

(30) Priorität : 19.06.82 DE 3222983

(43) Veröffentlichungstag der Anmeldung :
04.01.84 Patentblatt 84/01

(45) Bekanntmachung des Hinweises auf die Patenterteilung : 16.04.86 Patentblatt 86/16

(84) Benannte Vertragsstaaten :
CH DE FR GB IT LI SE

(56) Entgegenhaltungen :
DE-A- 2 241 647
FR-A- 1 572 623
FR-A- 2 255 567
GB-A- 1 182 595
US-A- 3 170 228
US-A- 3 651 659

(73) Patentinhaber : Süddeutsche Kühlerfabrik Julius Fr.
Behr GmbH & Co. KG.
Mauserstrasse 3
D-7000 Stuttgart 30 (DE)

Sorbexx GmbH Gesellschaft für Adsorptionstechnik
und Verbundstoffe
Bayreuther Strasse 3-5
D-8586 Gefrees (DE)

(72) Erfinder : Wilken, Harald, Dr. Ing.
Linzer Strasse 91B
D-7000 Stuttgart 30 (DE)
Erfinder : Sieber, Rolf, Dipl.-Ing.
Vaihinger Strasse 91
D-7130 Mühlacker 6 (DE)
Erfinder : Frank, Wolfgang, Dipl.-Ing.
Johann-Strass-Weg 14
D-7257 Ditzingen (DE)
Erfinder : Rupprecht, Michael, Dipl.-Ing.
Albert-Schweitzer-Strasse 11
D-8586 Gefrees (DE)

(74) Vertreter : LOUIS, PÖHLAU, LOHRENTZ & SEGETH
Kesslerplatz 1 P.B. 3055
D-8500 Nürnberg (DE)

**Beschreibung**

Die Erfindung bezieht sich auf einen Wärmetauscher der im Oberbegriff des Anspruches 1 beschriebenen Art.

Es besteht bei bestimmten Einsatzgebieten der Wunsch, die einen Wärmetauscher durchströmende, die Wärmetauschflächen des Wärmetauschers beaufschlagende Luft von Geruchs- bzw. Schadstoffen zu reinigen. Insbesondere wird mit zunehmender Verschmutzung der Luft und mit ebenfalls gestiegenem Komfortbewusstsein des Verbrauchers seit mehreren Jahren versucht, die in den Fahrgastraum eines Kraftfahrzeuges eintretende, erwärmte oder abgekühlte Luft zusätzlich auch zu filtern bzw. zu reinigen. Die bisher bekannten Lösungen laufen dabei im allgemeinen darauf hinaus, im Ansaugkanal einer Heizungs- bzw. Klimaanlage ein zusätzliches Filterelement vorzusehen, wie es beispielsweise durch die DE-A-29 15 501 bekannt ist. Eine derartige Lösung hat den grundsätzlichen Nachteil, dass für das Filterelement zusätzlicher Raum beansprucht wird, der jedoch gerade bei Kraftfahrzeugen nur in äusserst beschränktem Masse zur Verfügung steht.

Bei der Verwendung von an sich bekannten Kohleschüttfiltern bzw. Filtern aus einem Schaumstoff oder Vlies, die mit Adsorbern belegt sind, ergibt sich ausserdem der Nachteil, dass diese Filter, sofern eine hinreichende Filterwirkung erreicht werden soll, meist einen verhältnismässig hohen Strömungswiderstand haben. Auch dieser Mangel ist insbesondere bei Kraftfahrzeugen von erheblicher Bedeutung, wo ja der Leistung der eingesetzten Gebläse gewisse Grenzen gesetzt sind und ausserdem unter Umständen das Bestreben dahin geht, beim fahrenden Fahrzeug überhaupt ohne Gebläse auszukommen. Bei Verwendung eines bekannten Filters würde dann unter Umständen nicht mehr ausreichend Frischluft in das Fahrzeuginnere gelangen.

Ein gattungsgemässer Wärmetauscher ist aus der US-A 3 170 228 bekannt. Dieser Wärmetauscher weist hohle, poröse Rippen auf, die mit einer Flüssigkeit gefüllt werden können, die desinfizierende Substanzen oder Geruchsstoffe enthalten kann. Wenn der Wärmetauscher heiss ist, diffundiert die Flüssigkeit mit den Wirkstoffen durch die porösen Wände der Rippen und wirkt dann auf die Umgebungsluft entsprechend ein. Grundvoraussetzung bei einem derartigen Wärmetauscher ist jedoch, dass mit hinreichend hohen Temperaturen gearbeitet wird. Die porösen Rippen haben ausserdem den Nachteil, dass sich an ihnen sehr leicht Schmutz anlagert. Beide Umstände verbieten es, entsprechende Wärmetauscher z. B. in Klimaanlagen von Fahrzeugen einzusetzen. Ein weiterer, gerade in diesem Zusammenhang wesentlicher Nachteil des bekannten Wärmeaustauschers ist auch, dass die hohlen Rippen sehr viel Platz in Anspruch nehmen und zusätzlich mechanisch empfindlich sind.

Der Erfindung liegt daher die Aufgabe zugrunde, eine raumsparende Lösung für die Reinigung bzw. Filterung von Luft zu schaffen, welche über Wärmetauschflächen eines Wärmetauschers strömt, wobei gleichzeitig der Strömungswiderstand möglichst wenig erhöht werden soll. Insbesondere ist es Aufgabe der Erfindung, die in einer Heizungs- bzw. Klimaanlage für ein Kraftfahrzeug erwärmbare bzw. abkühlbare Luft gleichzeitig in raumsparender Weise und ohne wesentliche Erhöhung des Strömungswiderstandes von unangenehmen Geruchs- und Schadstoffen befreien zu können.

Zur Lösung dieser Aufgabe wird nach der Erfindung vorgeschlagen, einen gattungsgemässen Wärmetauscher derart auszubilden, dass die Substanz, mittels derer in der Luft vorhandene Geruchs- und/oder Schadstoffe beseitigt werden, zumindest bereichsweise auf der von Luft beaufschlagten Wärmetauschfläche angeordnet ist. Dabei kann die Belegung mit der Substanz sowohl über die gesamte Fläche als auch nur über gewisse, beispielsweise in Form von Streifen oder willkürlich angeordneter Zonen erfolgen. Es ist weiterhin denkbar, die Belegung der Wärmetauschfläche mit der Substanz in unterschiedlichen Zonen mit unterschiedlicher Belegungsdichte vorzusehen, um auf diese Weise in verschiedenen, gegebenenfalls unterschiedlich von zu reinigender Luft beaufschlagten Zonen auch eine verschieden hohe Aufnahmemöglichkeit für Geruchs- bzw. Schadstoffe zu schaffen.

Wenn mann, wie nach der Erfindung vorgeschlagen, die luftseitige Wärmetauschfläche eines ohnehin vorhandenen Wärmetauschers mit der reinigenden Substanz belegt, entfällt auf jeden Fall der bei vorbekannten Lösungen benötigte zusätzliche Raum für ein Filterelement bzw. einen Filtereinschub, z. B. in einer Heizungs- bzw. Klimaanlage eines Kraftfahrzeuges. Die Substanz, die von der konditionierten Luft überströmt wird, entzieht der Luft die Geruchs- und/oder Schadstoffe durch Adsorption, Chemiesorption und/oder Katalyse. Es wird auf diese Weise eine echte Integration von Filter und Wärmetauscher erzeugt. Weiter bietet ein Vorgehen nach der Erfindung noch den Vorzug, dass der Strömungswiderstand des Wärmetauschers an sich kaum verändert wird. Es ist insbesondere ohne Schwierigkeiten möglich, den gewünschten Strömungswiderstand durch geeignete Wahl der Geometrie des Wärmetauschers an die vorgesehene Durchsatzmenge anzupassen. Dies kann bei einem üblichen Wärmetauscher z. B. durch Veränderung des Rippenabstandes, der Dimensionen der Rippen, der Dimension der Strömungskanäle usw., erfolgen.

Es ist im Rahmen der Erfindung möglich, dass der Wärmetauscher als Regenerator ausgebildet ist, d. h. nur eine einzige Wärmetauschfläche und eine Wärmespeichermasse aufweist. Beispielsweise kann der Regenerator als trommelförmiger Wärmespeicher mit nur einer einzigen Wärmetauschfläche in einem Abluft- und einem Zuluftstrom rotieren und somit die Wärme von der Abluft- auf die Zuluftseite bzw. umgekehrt transportieren. Ein derartiger Wärmetauscher kann für die Filterwirkung besonders vorteilhaft sein, weil auf der kalten Seite eine Adsorption, d. h. eine Filterwirkung, und auf der heissen Seite eine Desorption, d. h. eine Regenerierung der filternden Substanz, stattfindet. Auf diese Weise kann die Wirksamkeitsdauer der filternden Substanz erheblich verlängert werden.

Eine andere erfindungsgemässe Möglichkeit besteht darin, dass der Wärmetauscher als Rekuperator ausgebildet ist, d. h. zwei Wärmetauscherflächen vorgesehen sind, wobei diese jeweils von einem Wärmetauschmedium beaufschlagt werden. Auch hier ergibt sich der Vorteil, dass die luftseitig beaufschlagte Wärmetauschfläche als grossflächiger Träger für die Filtersubstanz herangezogen werden kann.

Vorteilhafterweise weist der Wärmetauscher von einem Wärmetauschmedium durchströmte Kanäle auf, welche vorzugsweise als Rohre ausgebildet sind und deren von Luft beaufschlagte Wärmetauschfläche durch Rippen vergrössert ist. Durch diese Vergrösserung der luftseitigen Wärmetauschfläche ergibt sich der Vorteil, dass mehr Filtersubstanz untergebracht werden kann und damit eine bessere Filterwirkung erzielbar ist. Zweckmässigerweise besitzt die von Luft beaufschlagte Wärmetauschfläche eine hohe Wärmeleitfähigkeit und ist insbesondere aus einem metallischen Werkstoff hergestellt. Dies bietet den Vorteil, dass zur Regenerierung der Filtersubstanz der luftseitigen Wärmetauschfläche auf geeignete Weise Energie, beispielsweise Wärmeenergie, zugeführt werden kann, wodurch die luftseitige Oberfläche erhitzt und somit durch Desorption eine Regenerierung der Filtersubstanz bewirkt wird.

Es ist nach der Erfindung weiter vorgesehen, dass der Wärmetauscher als Verdampfer ausgebildet ist, in welchem Falle das Wärmetauschmedium zweckmässig ein Kältemittel ist. In diesem Falle ergibt sich infolge der niedrigen Oberflächentemperatur auf der Luftseite eine besonders günstige Filterwirkung, da der physikalische Vorgang der Adsorption in einem niedrigen Temperaturbereich besonders intensiv verläuft. Entsprechendes gilt prinzipiell auch dann, wenn der Wärmetauscher zwar Teil einer Heizung ist, diese jedoch während des Filtervorganges nicht betrieben wird, da auch dann die Wärmetauschertemperatur entsprechend niedrig liegt.

Günstigerweise sind bei Vergrösserung der Wärmetauschfläche durch Rippen diese quer zu den Rohren angeordnet und lamellenartig ausgebildet, weil sich dann bei geringem Platzbedarf einerseits eine grosse Rippenoberfläche erzielen und andererseits eine einfache Bauweise erreichen lassen.

Die filternde Substanz kann unterschiedliche Eigenschaften besitzen. Erfindungsgemäss ist vorgesehen, dass die Substanz Adsorber enthält, das sind Stoffe mit einer besonders grossen Oberfläche, die der Luft Geruchsstoffe durch Anlagerung an diese Oberfläche entziehen. Die Adsorption ist also ein physikalischer Vorgang, der nur bis zu einer bestimmten oberen Temperaturgrenze stattfindet, während oberhalb dieser Temperaturgrenze Desorption eintritt, d. h. sich dann die an der Oberfläche angelagerten Stoffe wieder von der Adsorbersubstanz lösen. Die Adsorbersubstanz kann also durch Desorption, d. h. entsprechende Erwärmung, reaktiviert bzw. regeneriert werden. Als Adsorbersubstanz findet zweckmässig Aktivkohle Verwendung. Bei Aktivkohle handelt es sich um eine Adsorbersubstanz mit besonders grosser innerer Oberfläche für die Adsorption von Geruchsstoffen. Selbstverständlich kann die filternde Substanz nicht nur eine Adsorbersubstanz enthalten sondern im wesentlichen insbesondere vom Adsorbersubstanz gebildet sein.

Es ist nach der Erfindung weiter vorgesehen, dass die Substanz in körnigem Zustand oder in Form von Kügelchen auf der Wärmetauschfläche angeordnet ist. Insbesondere die Verwendung einer kugelförmigen Adsorbersubstanz bringt den Vorteil mit sich, dass die Substanz dann gute mechanische Eigenschaften aufweist, d. h. einerseits eine relativ hohe Festigkeit, andererseits hohe Widerstandsfähigkeit gegen Abrieb. Selbstverständlich wäre es denkbar, die Adsorbersubstanz auch in anderer Weise an der Wärmetauschfläche festzulegen, beispielsweise als aktivierter Faserverbund (Vlies, Gewirk, Gewebe).

Vor allem beim Einsatz in Kraftfahrzeug-Heizungs- bzw. -Klimaanlagen ist es vorteilhaft, wenn die Substanz feuchtigkeitsunempfindliche Spezialadsorber enthält. Diese Spezialadsorber weisen eine spezielle Ummantelung auf, die das Eindringen von Wassermolekülen in das Innere verhindert, andererseits aber den Zutritt der Geruchsstoffe ermöglicht. Auf diese Eigenschaft kommt es gerade beim Betrieb mit feuchter Luft, wie sie bei Kraftfahrzeug-Klimaanlagen häufig auftritt, an.

Es kann weiterhin zweckmässig sein, wenn die Substanz Katalysatoren enthält, die dafür sorgen, dass Schadstoffe, z. B. Stickoxide, der Luft entzogen werden.

Die Aufbringung der filternden bzw. reinigenden Substanz auf die Wärmetauschfläche kann in unterschiedlicher Weise erfolgen. Es ist erfindungsgemäss vorgesehen, dass die Substanz mittels eines Haftmittels auf der Wärmetauschfläche festgelegt ist. Als Haftmittel kommen dabei einerseits Kleber in Frage, die zuerst auf die luftseitige Wärmetauschfläche aufgebracht werden, worauf dann die Substanz in Form von Körnern bzw. Kugeln aufgetragen wird. Eine andere Möglichkeit bestünde darin, die Substanz in Form einer Paste aufzutragen, welche ein Bindemittel beinhaltet, wobei dann nach dem Auftragen der Paste mit der Substanz und dem Bindemittel in einem besondere Vorgang die Festlegung der Substanz an der Wärmetauschfläche, z. B. infolge des Aushärtens des Bindemittels bzw. einer Austreibung des in der Paste enthaltenen Anteigungs- bzw. Lösemittels erfolgt.

Wie bereits erwähnt, kann die Geruchs- und/oder Schadstoffe beseitigende Substanz nur bereichsweise auf der Wärmetauschfläche angeordnet sein. Für bestimmte Anwendungsgebiete, beispielsweise Kraftfahrzeug-Klimaanlagen, kann es hierbei vorteilhaft sein, wenn die Substanz auf der Wärmetauschfläche in Form von schräg zur Luftströmungsrichtung verlaufenden Streifen unter Belassung von freien Flächen angeordnet ist. Die Anordnung der Substanz in schräg zur Luftströmungsrichtung verlaufenden Streifen bringt — im Vergleich zu einer Anordnung in Streifen parallel zur Luftströmungsrichtung — den Vorteil, dass die Luft zuverlässig die Substanz überstreicht, trotzdem aber der Strömungswiderstand nicht wesentlich erhöht wird.

Schliesslich liegt es im Rahmen der Erfindung, dass die auf der Wärmetauschfläche angeordnete Substanz eine rauhe, turbulenzerzeugende Oberfläche bildet. Dies kann dadurch erreicht werden, dass die die Substanz bildenden Partikel über die an sich glatte Wärmetauschfläche vorstehen und dadurch deren Oberflächen-Rauhigkeit erhöht wird, was insbesondere bei Verwendung von kugelförmiger Substanz gilt. Die erhöhte Rauhigkeit der Oberfläche und die dadurch entstehende Turbulenz verbessern den Wärmeübergang zwischen luftseitiger Oberfläche des Wärmetauschers und der hier- über strömenden Luft.

Zusammenfassend kann festgestellt werden, dass der wesentliche Vorteil der Erfindung darin liegt, dass die an einem Wärmetauscher luftseitig zur Verfügung stehende grosse Oberfläche gleichzeitig für die Luftreinigung bzw. Filterung herangezogen werden kann, ohne dass hierdurch der Wärmeaustausch in nennenswertem Masse beeinträchtigt wird. Durch diese Intergration von Filter und Wärmetauscher ergibt sich eine erhebliche Raumeinsparung, die sich insbesondere bei Kraftfahrzeug-Heizungs- bzw. -Klimaanlagen vorteilhaft auswirkt, da dort der für einen separaten Filtereinschub benötigte Raum kaum zur Verfügung stünde. Ausserdem wird der bei bekannten Kohleschüttfiltern bzw. voluminösen Vlies- oder Schaumstoff-Filtern entstehende hohe Strömungswiderstand vermieden, wobei gegebenenfalls ohne weiteres eine Anpassung des Lamellenabstandes bzw. der Plattdimensionen an die gewünschte Luft-Durchsatzmenge möglich ist.

Ein Ausführungsbeispiel der Erfindung ist in der Zeichnung dargestellt und wird nachstehend näher erläutert.

Es zeigen:

Figur 1 eine Klimmanlage für ein Kraftfahrzeug in schematischer Darstellung,

Figur 2 den Verdampfer einer Klimaanlage nach Figur 1 in der Seitenansicht,

Figur 3 eine erfindungsgemäss mit Adsorbersubstanz belegte Rippe gemäss Schnitt nach der Linie III-III in Figur 2

und

Figur 4 einen Teilschnitt nach der Linie IV-IV in Figur 3 in vergrösserter Darstellung mit kugelförmiger Adsorbersubstanz.

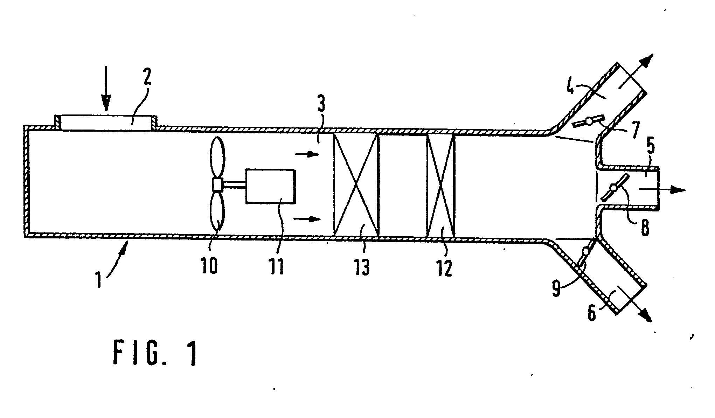

In Figur 1 ist als Anwendungsbeispiel für einen erfindungsgemässen Wärmetauscher eine Klimaanlage für ein Kraftfahrzeug schematisch dargestellt. Das Gehäuse 1 der Klimaanlage weist in seinem vorderen Bereich einen Lufteintritt 2 und in seinem hinteren Bereich Luftaustrittsdüsen 4, 5 und 6 auf, aus denen die in der Klimaanlage aufbereitete Luft in den Innenraum des Kraftfahrzeuges strömt. Zur Regelung der einzelnen Luftströme sind in den verschiedenen Austrittsdüsen 4, 5 und 6 Klappen 7, 8 und 9 vorgesehen, mit denen die Luftströme gedrosselt oder vollständig unterbrochen werden können. Im Luftkanal 3 ist zur Förderung der Luft ein Gebläse, bestehend aus Gebläserad 10 und Gebläsemotor 11 angeordnet. In Strömungsrichtung hinter dem Gebläse befindet sich ein vom Kältemittel durchströmter, den Verdampfer 13 bildender Wärmetauscher und dahinter ein von der Kühlflüssigkeit der Brennkraftmaschine durchströmter, als Heizkörper 12 dienender Wärmetauscher. Beide Wärmetauscher 12 und 13 (Heizkörper und Verdampfer) weisen eine relativ starke Verrippung, d. h. eine grosse luftseitige Wärmetauschfläche, auf. Die in das Klimagehäuse 1 eintretende Luft wird also — bei Betrieb des Verdampfers 13 — zunächst abgekühlt und anschliessend im Heizkörper 12 nach Bedarf wieder erwärmt. Während der Verdampfer so in das Klimagehäuse 1 eingebaut ist, dass er von der Luft nicht umströmt, sondern in jedem Fall durchströmt werden muss, kann der Wärmetauscher 12 je nach Art der gewählten Regelung (luftseitig oder wasserseitig) von der Luft auf dem Wege eines Bypasses umgangen werden.

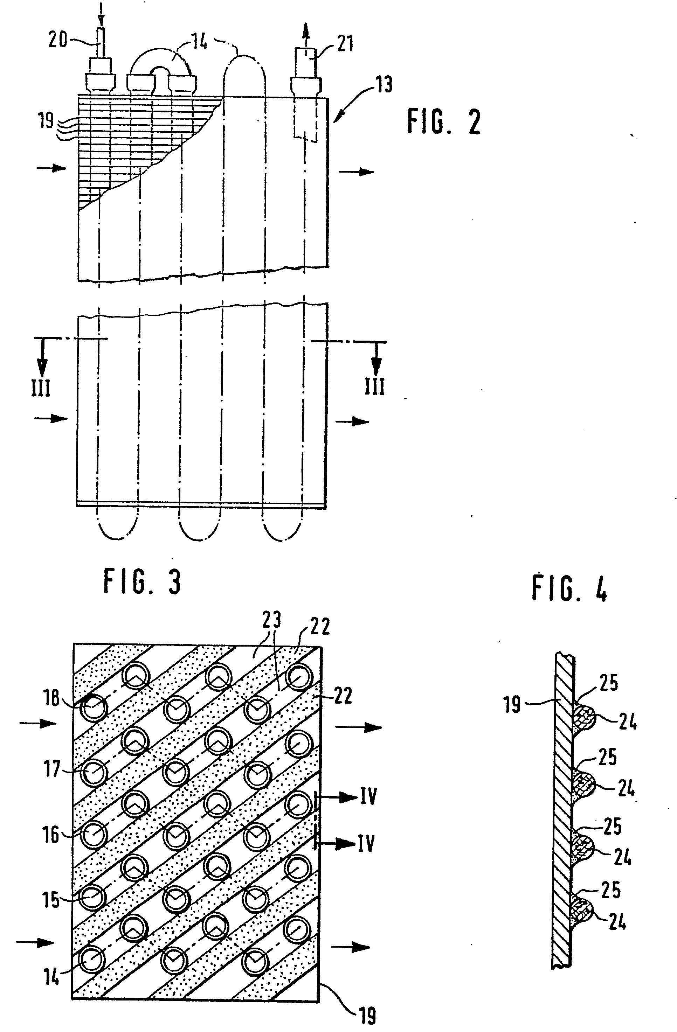

In Figur 2 und 3 ist der Verdampfer 13 mit seinen wesentlichen Bestandteilen vergrössert dargestellt, wobei die Luftströmungsrichtung durch in der Zeichnung waagrecht dargestellte Pfeile angedeutet ist. Der Verdampfer 13 weist insgesamt fünf zick-zack-förmig in Luftströmungsrichtung verlaufende Rohrschlangen 14, 15, 16, 17 und 18 auf, die jeweils eine eigene Einspritzung mit Kältemittel aufweisen, wobei lediglich für die erste Rohrschlange 14 das Einspritzröhrchen 20 in der Zeichnung dargestellt ist. In Luftströmungsrichtung weist jede Rohrschlange sechs Rohrreihen hintereinander auf, die durch Bögen miteinander verbunden sind, wobei das Kältemittel der ersten Rohrschlange 14 durch das Austrittsrohr 21 wieder austritt — dies trifft in gleicher Weise für die weiteren Rohrschlangen 15, 16, 17 und 18 zu. Sämtliche Rohre sind durch gemeinsame Rippen 19 wärmeleitend zur Vergrösserung der luftseitigen Wärmeaustauschfläche verbunden, wobei die Rippen 19 in Rohrlängsrichtung besonders dicht übereinander angeordnet sind. Die Rippen 19 sind daher besonders dünn ausgebildet und vorzugsweise aus Aluminium hergestellt.

In Figur 3, einer Draufsicht auf eine Rippe 19, ist die erfindungsgemässe Belegung der Rippenoberfläche mit Adsorbersubstanz erkennbart, wobei die Substanz hier in einer bevorzugten Ausführungsform in Form von schräg zur Luftströmungsrichtung verlaufenden Streifen 22 auf der Rippenoberfläche angeordnet ist. Zwischen diesen Streifen 22 bzw. den einzelnen Rohren der Rohrschlangen 14, 15, 16, 17 und 18 verbleiben somit freie, d. h. unbelegte Flächen 23, der Rippen 19, über die ein uneingeschränkter Wärmeaustausch direkt zwischen der Oberfläche der Rippen 19 und der Luft erfolgen kann. Grundsätzlich kann jedoch auch die gesamte Oberfläche der Rippen 19 sowie sämtlicher Rohrschlangen 14, 15, 16, 17 und 18 mit Adsorbersubstanz belegt werden. Durch die in Figur 3 dargestellte Belegung in Form von schräg zur Luftströmungsrichtung verlaufenden Streifen 22 wird gewährleistet, dass die Adsorbersubstanz äusserst wirkungsvoll von der Luft angeströmt und überstrichen wird. Diese Anordnung ergibt somit eine möglichst gleichmässige Beaufschlagung und somit Ausnutzung der Adsorbersubstanz.

In Figur 4 ist in vergrösserter Darstellung gemäss einem Teilschnitt IV-IV in Figur 3 eine spezielle Form der Adsorbersubstanz sowie die Art ihrer Verbindung mit der Oberfläche der Rippen 19 gezeigt. Die Adsorbersubstanz besteht hier aus einzelnen Kügelchen 24, vorzugsweise aus Aktivkohle, die jeweils mittels eines Klebers 25 dauerhaft mit der Oberfläche der Rippen 19 verbunden sind. Der Kleber kann vorher auf die Rippenoberfläche aufgebracht und dann mit den Kügelchen 24 der Adsorbersubstanz beschichtet werden, so dass sich eine dauerhafte Verbindung ergibt. Die Kügelchen 24 bzw. sonstige Adsorberpartikel können aber ebenso gut mit einem geeigneten Binder zu einer Paste oder Dispersion angerührt werden, die dann in einem Vorgang auf die Rippenoberfläche aufgebracht und beispielsweise unter Erwärmung ausgehärtet wird. In dem Ausführungsbeispiel gemäss Figur 4 ist erkennbar, dass zwischen den einzelnen Kügelchen 24 eine freie (unbelegte) Rippenoberfläche verbleibt, die somit dem Wärmeaustausch zwischen Luft und Rippenoberfläche uneingeschränkt zur Verfügung steht. Die über die glatte Oberfläche der Rippen 19 vorstehenden Kügelchen 24 erzeugen gegenüber der unbelegten, glatten Oberfläche eine rauhe Oberfläche, so dass die Luftströmung zur Turbulenz angeregt und der Wärmeaustausch somit verbessert wird. Zur Optimierung von Druckabfall und Wärmeaustausch sind die verschiedensten Anordnungen der Abdsorbersubstanz auf der Oberfläche der Rippen 19 denkbar.

Da die, insbesondere aus der Umgebung eines Kraftfahrzeuges, aufgenommene Luft für eine Klimaanlage häufig eine hohe relative Luftfeuchtigkeit aufweist, ist es im Hinblick auf die Lebensdauer und die Wirksamkeit der Adsorbersubstanz von Vorteil, wenn diese feuchtigkeitsunempfindlich ist. Letzteres kann durch sogenannte Spezialadsorber erreicht werden, die einerseits mit einer speziellen Ummantelung versehen sind, die ein Hindurchtreten von Wassermolekülen verhindert, jedoch gegenüber den unangenehmen Geruchsstoffen durchlässig ist, so dass eine gewisse Geruchsfilterung erreicht wird, andererseits durch die Modifizierung der inneren Oberfläche die Anlagerung von Wasser im Vergleich zu der von Gasen zurückdrängen bzw. erschweren.

**Patentansprüche**

1. Wärmetauscher, insbesondere für Heizungs- und/oder Klimaanlagen, vorzugsweise in Kraftfahrzeugen, mit einer von Luft beaufschlagten Wärmetauschfläche, wobei in der Luft vorhandene Geruchs- und/oder Schadstoffe mittels einer Substanz beseitigt werden, dadurch gekennzeichnet, dass die Substanz zumindest bereichsweise auf der von Luft beaufschlagten Wärmetauschfläche (19) angeordnet ist.

2. Wärmetauscher nach Anspruch 1, dadurch gekennzeichnet, dass der Wärmetauscher als Regenerator ausgebildet ist.

3. Wärmetauscher nach Anspruch 1, dadurch gekennzeichnet, dass der Wärmetauscher als Rekuperator ausgebildet ist.

4. Wärmetauscher nach Anspruch 1 oder 3, dadurch gekennzeichnet, dass der Wärmetauscher von einem Wärmetauschmedium durchströmte Kanäle aufweist.

5. Wärmetauscher nach Anspruch 4, dadurch gekennzeichnet, dass die Kanäle als Rohre (14, 15, 16, 17, 18) ausgebildet sind und deren von Luft beaufschlagte Wärmetauschfläche durch Rippen (19) vergrössert ist.

6. Wärmetauscher nach Anspruch 5, dadurch gekennzeichnet, dass die von Luft beaufschlagte Wärmetauschfläche aus einem metallischen Werkstoff hergestellt ist.

7. Wärmetauscher nach Anspruch 4, 5 oder 6, dadurch gekennzeichnet, dass der Wärmetauscher als Verdampfer (13) ausgebildet ist.

8. Wärmetauscher nach Anspruch 7, dadurch gekennzeichnet, dass das Wärmetauschmedium ein Kältemittel ist.

9. Wärmetauscher nach Anspruch 5, 6, 7 oder 8, dadurch gekennzeichnet, dass die Rippen (19) quer zu den Rohren (14, 15, 16, 17, 18) angeordnet und lamellenartig ausgebildet sind.

10. Wärmetauscher nach einem der Ansprüche 1 bis 9, dadurch gekennzeichnet, dass die Substanz (22, 24), Adsorber enthält.

11. Wärmetauscher nach Anspruch 10, dadurch gekennzeichnet, dass die Substanz (22, 24) Aktivkohle enthält.

12. Wärmetauscher nach einem der Ansprüche 1 bis 11, dadurch gekennzeichnet, dass die Substanz körnig ist oder aus Kügelchen (24) besteht.

13. Wärmetauscher nach einem der Ansprüche 1 bis 12, dadurch gekennzeichnet, dass die Substanz (22, 24) feuchtigkeitsunempfindliche Spezialadsorber enthält.

14. Wärmetauscher nach einem der Ansprüche 1 bis 13, dadurch gekennzeichnet, dass die Substanz (22, 24) Katalysatoren enthält.

15. Wärmetauscher nach einem der Ansprüche 1 bis 14, dadurch gekennzeichnet, dass die Substanz (22, 24) mittels eines Haftmittels (25) auf der Wärmetauschfläche (19) festgelegt ist.

16. Wärmetauscher nach einem der Ansprüche 1 bis 15, dadurch gekennzeichnet, dass die Substanz auf der Wärmetauschfläche (19) in Form von schräg zur Luftströmungsrichtung verlaufenden Streifen (22) unter Belassung von freien Flächen (23) angeordnet ist.

17. Wärmetauscher nach einem der Ansprüche 1 bis 16, dadurch gekennzeichnet, dass die Substanz (22, 24) eine rauhe, turbulenzerzeugende Oberfläche bildet.

## Claims

1. A heat exchanger, in particular for heating or air conditioning installations, preferably in motor vehicles, with a heat exchanger surface subjected to air flow, odorous and/or deleterious matter being removed by means of a substance, characterised in that the substance is disposed at least in a zone of the heat exchanger area (19) subjected to the air flow.

2. A heat exchanger according to Claim 1, characterised in that the heat exchanger is designed as a regenerator.

3. A heat exchanger according to Claim 1, characterised in that the heat exchanger is designed as a recuperator.

4. A heat exchanger according to Claim 1 or 3, characterised in that the heat exchanger has ducts traversed by a heat exchange medium.

5. A heat exchanger according to Claim 4, characterised in that the ducts are designed as tubes (14, 15, 16, 17, 18) and that their surface subjected to air flow is increased by fins (19).

6. A heat exchanger according to Claim 5, characterised in that the heat exchanger surface subjected to air flow is made of a metallic material.

7. A heat exchanger according to Claim 4, 5 or 6, characterised in that the heat exchanger is designed as an evaporator (13).

8. A heat exchanger according to Claim 7, characterised in that the heat exchange medium is a cooling agent.

9. A heat exchanger according to Claim 5, 6, 7 or 8, characterised in that the fins (19) are arranged transversely to the tubes (14, 15, 16, 17, 18) and are designed in a lamellar form.

10. A heat exchanger according to one of Claims 1 to 9, characterised in that the substance (22, 24) contains adsorbents.

11. A heat exchanger according to Claim 10, characterised in that the substance (22, 24) contains activated charcoal.

12. A heat exchanger according to one of Claims 1 to 11, characterised in that the substance is granular or consists of globules (24).

13. A heat exchanger according to one of Claims 1 to 12, characterised in that the substance (22, 24) contains special adsorbers which are non-hygroscopic.

14. A heat exchanger according to one of Claims 1 to 13, characterised in that the substance (22, 24) contains catalysts.

15. A heat exchanger according to one of Claims 1 to 14, characterised in that the substance (22, 24) is fixed by means of an adhesive (25) on the heat exchanger surface (19).

16. A heat exchanger according to one of Claims 1 to 15, characterised in that the substance on the heat exchanger surface (19) is arranged in the form of strips (22) which are inclined to the direction of the air flow whilst leaving free areas (23).

17. A heat exchanger according to one of Claims 1 to 16, characterised in that the substance (22, 24) forms a rough surface generating turbulence.

## Revendications

1. Echangeur de chaleur, notamment pour installations de chauffage et/ou de climatisation, de préférence dans les véhicules automobiles, comportant une surface d'échange de chaleur balayée par l'air de manière que des matières odorantes et/ou nocives se trouvant dans l'air soient éliminées à l'aide d'une substance, caractérisé en ce que la substance est disposée au moins par zones sur la surface d'échange de chaleur (19) balayée par l'air.

2. Echangeur de chaleur selon la revendication 1, caractérisé en ce que l'échangeur de chaleur est agencé comme un régénérateur.

3. Echangeur de chaleur selon la revendication 1, caractérisé en ce que l'échangeur de chaleur est agencé comme un récupérateur.

4. Echangeur de chaleur selon la revendication 1 ou 3, caractérisé en ce que l'échangeur de chaleur comporte des canaux parcourus par un agent d'échange de chaleur.

5. Echangeur de chaleur selon la revendication 4, caractérisé en ce que les canaux sont définis par des tubes (14, 15, 16, 17, 18) dont la surface d'échange de chaleur balayée par l'air est augmentée par des ailettes (19).

6. Echangeur de chaleur selon la revendication 5, caractérisé en ce que la surface d'échange de chaleur balayée par l'air est constituée d'un matériau métallique.

7. Echangeur de chaleur selon la revendication 4, 5 ou 6, caractérisé en ce que l'échangeur de chaleur est agencé comme un évaporateur (13).

8. Echangeur de chaleur selon la revendication 7, caractérisé en ce que l'agent d'échange de chaleur est un réfrigérant.

9. Echangeur de chaleur selon la revendication 5, 6, 7 ou 8, caractérisé en ce que les ailettes (19) sont disposées perpendiculairement aux tubes (14, 15, 16, 17, 18) et sont agencées en forme de lamelles.

10. Echangeur de chaleur selon une des revendications 1 à 9, caractérisé en ce que la substance (22, 24) contient des agents d'adsorption.

11. Echangeur de chaleur selon la revendication 10, caractérisé en ce que la substance (22, 24) contient du charbon actif.

12. Echangeur de chaleur selon une des revendications 1 à 11, caractérisé en ce que la substance est granuleuse ou se compose de petites billes (14).

13. Echangeur de chaleur selon une des revendications 1 à 12, caractérisé en ce que la substance (22, 24) contient des agents spéciaux d'adsorption insensibles à l'humidité.

14. Echangeur de chaleur selon une des revendications 1 à 13, caractérisé en ce que la substance (22, 24) contient des catalyseurs.

15. Echangeur de chaleur selon une des revendications 1 à 14, caractérisé en ce que la substance (22, 24) est fixée sur la surface d'échange de chaleur (19) au moyen d'un adhésif (25).

16. Echangeur de chaleur selon une des revendications 1 à 15, caractérisé en ce que la substance est déposée sur la surface d'échange de chaleur (19) sous forme de bandes (22) orientées en oblique par rapport à la direction d'écoulement de l'air et en laissant des surfaces libres (23).

17. Echangeur de chaleur selon une des revendications 1 à 16, caractérisé en ce que la substance (22, 24) forme une surface rugueuse génératrice de turbulence.

FIG. 1

FIG. 2

FIG. 3

FIG. 4